# NEUE EUROPÄISCHE PATENTSCHRIFT

(11) **EP 0 386 313 B2**
(45) Veröffentlichungstag und Bekanntmachung des Hinweises auf die Entscheidung über den Einspruch: **03.09.1997**
(45) Hinweis auf die Patenterteilung: 04.03.1992
(21) Anmeldenummer: 89116755.3
(22) Anmeldetag: 11.09.1989
(51) Int. Cl.: B65D 1/38

(54) **Aus Kunststoff hergestelltes Lager- und Transportmittel**
Storage and transport means made of plastics
Moyen de transport et de stockage en matière plastique

(30) Priorität: 07.03.1989 DE 3907242; 18.03.1989 DE 3909022
(43) Veröffentlichungstag der Anmeldung: 12.09.1990
(73) Patentinhaber: Stucki Kunststoffwerk und Werkzeugbau GmbH., D-32107 Bad Salzuflen (DE)
(72) Erfinder: Korte, Klaus, D-4902 Bad Salzuflen 1 (DE)
(74) Vertreter: Junius, Walther, Dr.

(56) Entgegenhaltungen:
- EP-A- 0 262 526
- DE-A- 2 723 963
- DE-A- 3 709 190
- DE-A- 3 716 503
- DE-B- 2 456 080
- DE-U- 8 137 907
- DE-U- 8 521 497
- FR-A- 2 167 909
- US-A- 3 858 746
- US-A- 3 985 258

## Beschreibung

Die Erfindung betrifft ein einstückig aus Kunststoff hergestelltes Lager- und Transportmittel in Form eines Kastens oder einer Palette, mit einem Boden, dessen Unterflächen, auf der der Kasten steht, in Form einer umlaufenden, auf Röllchenbahnen laufenden Fußleiste ausgebildet ist.

Als Kasten ist dieses Transportmittel aus dem DE-U-85 21 497 bekannt geworden. Der Boden dieses Kastens weist zwei Flächen auf, eine Unterfläche in Form einer umlaufenden Fußleiste, die sich am äußeren Rand in die Seitenwände nach oben hin fortsetzt, und eine Oberfläche, die mittig im Kasten mit Abstand über der Unterfläche angeordnet ist und mit dieser durch eine von ihren Rand nach unten verlaufende umlaufende Wand verbunden ist, die in die Unterfläche an deren inneren Rand übergeht. Der besondere Vorteil dieses Kastens ist es, daß er selbst in schwer beladenem Zustand, wenn sich der Boden in der Mitte unter der Last nach unten durchwölbt, nicht nur auf Rollenbahnen, sondern sogar auf Röllchenbahnen und Kugeltischen einwandfrei und geräuscharm läuft. Prinzipiell läuft nicht jeder Kasten, der auf Rollenbahnen läuft, auch auf Röllchenbahnen und Kugeltischen. Denn die schmalen Röllchen mit ihrer geringen Auflagelinie, und noch mehr die Kugeln mit punktförmiger Anlage am Kastenboden, dringen leicht in Unebenheiten des Kastenbodens ein und behindern dann den Lauf des Kastens. Der Nachteil dieses Kastens ist es, daß er keine durchgehend von Seitenwand zu Seitenwand ebene Bodenoberfläche aufweist. Dadurch ist es schwierig, quaderförmige Waren im Kasten zu verpacken. Auch die Reinigung des Kastens ist erschwert, denn die rings um die mittig erhöhte Bodenoberfläche umlaufende Rinne bietet Verschmutzungen die Möglichkeit, sich in schwer zu reinigenden Ecken festzusetzen.

Um diesen Nachteil unterschiedlicher Höhen der Aufstellfläche für das im Kasten zu verpackende Gut zu vermeiden und gleichzeitig die Durchwölbung des Kastenbodens unter schwerer Last zu eliminieren, ist gemäß dem DE-U-81 37 907 und der EP-A-0 262 526 ein durchgehend von einer Seitenwand zur gegenüberliegenden Seitenwand ebener Kastenboden an seiner Unterseite mit einem Verstärkungsrahmen aus einem Gitterwerk von rechtwinklig zur Bodenoberfläche angeordneten Rippen versehen worden. Da die Unterkanten dieser Rippen des den Verstärkungsrahmen bildenden Gitterwerks auf die Mitte zu nach oben verlaufen, läuft der Kasten auf Rollenbahnen auch dann, wenn sich die Bodenmitte unter Last in den Raum innerhalb des Verstärkungsrahmens hineinwölbt. Ein solches Gitterwerk verhakt sich auf Röllchenbahnen und ist auf Kugeltischen überhaupt nicht lauffähig. Aber auch auf Rollenbahnen tritt der Nachteil einer hohen Geräuschentwicklung auf.

Diese Nachteile werden auch nicht durch Verstärkungsrippen vermieden, die an der Unterkante der unter die Bodenebene herabgezogenen Längsseitenwände bodenparallel angebracht sind, wobei diese herabgezogenen Teile der Längsseitenwände die äußere Rippe des Gitterwerks des Verstärkungsrahmens bilden. Diese Verstärkungsrippen sind schmaler als im oberen Bereich der Kastenwände angeordnete Rippen. Diese Verstärkungsrippen sowie weitere parallel in Bodenoberflächenhöhe angeordnete weitere Verstärkungsrippen sowie diese miteinander verbindende Querrippen liegen nicht unter dem Boden, sondern außerhalb der Seitenwände und können daher, aber auch wegen ihrer Schmalheit, nichts zur Verbesserung der Lauffähigkeit des Kastens beitragen.

Die Erfindung vermeidet die Nachteile des Standes der Technik. Es ist die Aufgabe der Erfindung, ein auf Röllchenbahnen und Kugeltischen einwandfrei lauffähiges Transportmittel zu schaffen, dessen Bodenoberfläche leicht zu bepacken und zu reinigen ist.

Gemäß der Erfindung erstreckt sich die Oberfläche des Bodens, auf der das Gut steht, eben von Seitenwand zu Seitenwand beim Kasten und von Kante zu Kante bei der Palette, und ist die Fußleiste durch quer zu ihr verlaufende Rippen und durch eine an ihrer einen Seitenkante angeordnete durchgehende, Rippe mit der Bodenunterfläche unter Bildung von nach einer Seite hin offenen, vollständig unter der Bodenoberfläche liegenden Taschen verbunden.

Dieses Transportmittel läuft leicht auf Röllchenbahnen und Kugeltischen und weist den Vorteil eines sich eben über die gesamte Bodenoberfläche erstreckenden Bodens auf: er ist leicht bepackbar und leicht zu reinigen. Er vereinigt somit die Vorteile der oben beschriebenen bekannten Kästen in sich, ohne deren Nachteile aufzuweisen. Er ist leicht als einstückiges Kunststofformteil herstellbar und durch die nach außen geöffneten Taschen leicht entformbar. Die Fußleiste und die Rippenanordnung bilden dabei einen Versteifungsrahmen in Form eines doppelten Bodens. Es kommt darauf an, daß die Taschen tief unter den Boden greifen, weil die Längsrippe, die die Fußleistenseitenkante mit der Bodenoberfläche verbindet, eine für die Stabilität wichtige Stützfunktion ausübt.

Eine einwandfreie Lauffunktion und die größte Laufruhe werden dann erzielt, wenn die Breite der Fußleiste mindestens das 1,2fache des größten Abstandes der Kugeln oder Röllchen der Transportbahn beträgt, auf denen der Kasten beim Transport laufen soll.

Am einfachsten herstellbar ist das Transportmittel dann, wenn sämtliche Taschen nach außen hin offen sind.

Auch komplizierte Transportmittelkonstruktionen, wie z.B. doppelwandige Kästen, lassen sich problemlos dadurch herstellen, daß parallel zu doppelwandig ausgeführten Seitenwänden angeordnete Taschen nach innen zum Kastenbodenmittelpunkt hin offen sind.

Das Wesen der Erfindung ist nachstehend anhand von in der Zeichnung schematisch dargestellten Ausführungsbeispielen näher erläutert. Es zeigen:
- Fig. 1: einen Transportkasten, links im Querschnitt, rechts in Seitenansicht,

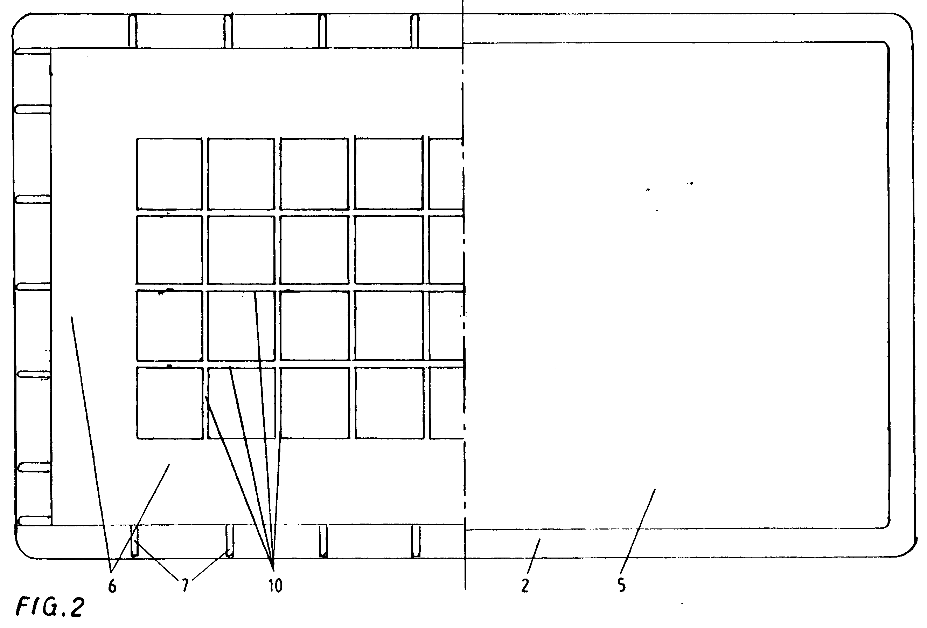

- Fig. 2: rechts eine Ansicht des Kastens von oben, links eine Ansicht von unten,
- Fig. 3: einen Querschnitt durch einen Teil einer Spritzgußform zur Herstellung eines einwandigen Kastens,
- Fig. 4: einen an seinen Stirnseiten doppelwandigen Kasten, links im Schnitt, rechts in Ansicht.

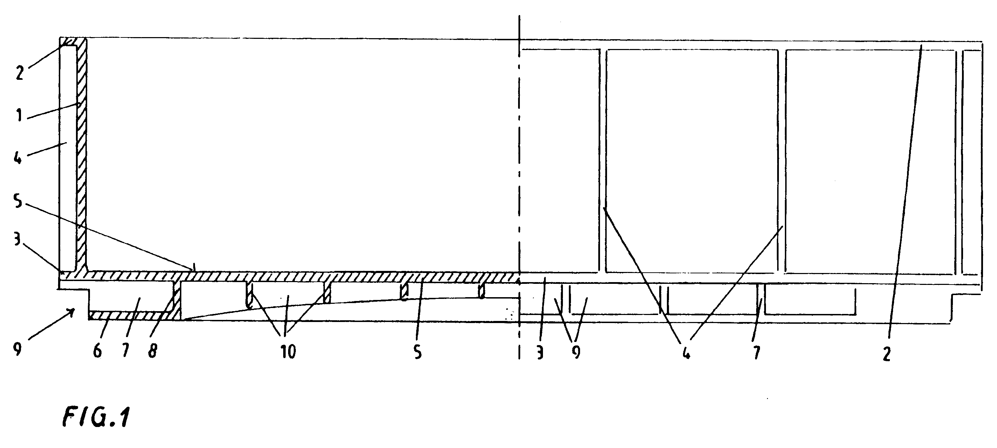

Der Transportkasten der Fig. 1 weist Seitenwände 1 auf, die an ihrer Außenseite mit einem oberen umlaufenden Rand 2, einem Bodenrand 3 und zwischen diesen angeordneten Rippen 4 versehen sind. Zwischen den Seitenwänden 1 erstreckt sich der Boden 5 als eine ebene Fläche von Seitenwand zu Seitenwand. Unterhalb des Bodens 5 befindet sich eine Fußleiste 6, die durch quer zur Fußleiste angeordnete Rippen 7 und eine an der der Außenkante der Fußleiste 6 abgewandten Seite angebrachte Längsrippe 8 mit dem Boden 5 verbunden und abgestützt ist. Bei dieser Ausbildungsform sind zwischen dem Boden 5, der Fußleiste 6 und den Rippen 7 und 8 Taschen 9 ausgebildet, die nach außen hin offen sind.

Unter dem Boden 5 sind zwischen den Längsrippen 8 sich kreuzende Bodenrippen 10 angebracht, deren Unterkante gewölbt ist, so daß die Rippen im Bereich der Längsrippen 8 eine größere Tiefe als in der Mitte des Kastens aufweisen.

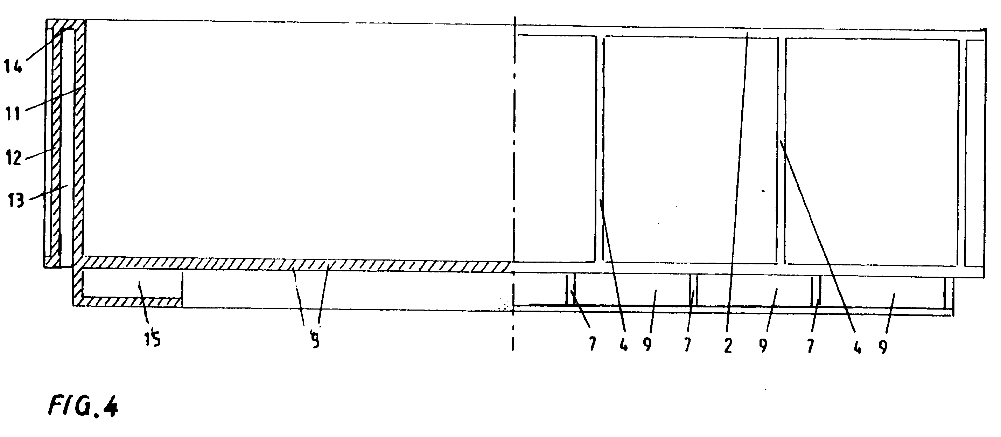

Der Kasten der Fig. 4 ist an seinen schmalen Stirnseiten doppelwandig ausgeführt, erweist eine Innenwand 11, eine Außenwand 12 und zwischen diesen Rippen 13 auf. Die Innenwand 11 und die Außenwand 12 sind an der oberen Kante durch das Wandungsteil 14 miteinander einstückig verbunden. Hier sind zur Halterung der Fußleiste 6 parallel zur Innenwand 11 Taschen 15 gebildet, die nach innen in Richtung auf die Mitte des Bodens 5 hin offen sind. Unterhalb des Bodens 5 sind im Bereich der einwandig ausgebildeten Seitenwände zur Halterung der Fußleiste 6 nach außen offene Taschen 9 durch zwischen dem Boden 5 und der Fußleiste 6 angeordnete Rippen 7 und 8 gebildet.

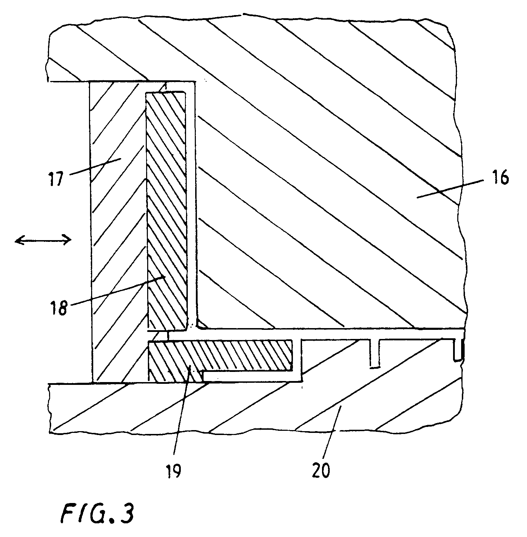

Fig. 3 zeigt einen Teil eines Querschnittes durch eine Spritzgußform für die Herstellung eines einwandigen Transportkastens. Der Mittelkern 16 formt die Innenwandungen des Kastens. Die Seitenwandungen werden durch quer zur Seitenwand verschiebbare Seitenteile 17 gebildet, welche Kerne 18 zur Bildung der Zwischenräume zwischen den Rippen 2, 3, 4 aufweisen. Unterhalb dieser Kerne 18 sind mit dem Abstand der Stärke der Bodenrippe 3 bzw. des Bodens 5 weitere Kerne 19 angeordnet, welche zur Bildung der Taschen 9 dienen. Das Teil 20 dient zur Formung der Außenseite des Bodens 5.

Von besonderer Wichtigkeit ist es, die Fußleiste 6 genügend breit auszubilden, damit der Kasten auch auf Rollen, Röllchen und Kugelrollenbahnen laufen kann.

Das ist dann erreicht, wenn die Breite der Fußleiste mindestens das 1,2fache des größten Abstandes der Kugeln oder Röllchen der Transportbahn beträgt.

## Patentansprüche

1. Einstückig aus Kunststoff hergestelltes Lager- und Transportmittel in Form eines Kastens oder einer Palette, mit einem Boden (5,6), dessen Unterfläche, auf der der Kasten steht, in Form einer umlaufenden, auf Röllchenbahnen laufenden Fußleiste (6) ausgebildet ist, dadurch gekennzeichnet, daß die Oberfläche (5) des Bodens (5,6), auf der das Gut steht, sich eben von Seitenwand (1) zu Seitenwand (1) beim Kasten und von Kante zu Kante bei der Palette erstreckt, und daß die Fußleiste (6) durch quer zu ihr verlaufende Rippen (7) und durch eine an ihrer einen Seitenkante angeordnete durchgehende Rippe (8) mit der Bodenunterfläche unter Bildung von nach einer Seite hin offenen, vollständig unter der Bodenoberfläche (5) liegenden Taschen (9, 15) verbunden ist.

2. Lager- und Transportmittel nach Anspruch 1, dadurch gekennzeichnet, daß die Breite der Fußleiste mindestens das 1,2fache des größten Abstandes der Kugeln oder Röllchen der Transportbahn beträgt, auf denen der Kasten beim Transport laufen soll.

3. Lager- und Transportmittel nach Anspruch 1, dadurch gekennzeichnet, daß sämtliche Taschen (9) nach außen hin offen sind.

4. Lager- und Transportmittel nach Anspruch 1, dadurch gekennzeichnet, daß parallel zu doppelwandig ausgeführten Seitenwänden angeordnete Taschen (15) nach innen zum Kastenbodenmittelpunkt hin offen sind.

## Claims

1. Storage and transport means manufactured in one piece from plastic in the form of a box or a pallet with a bottom (5, 6) whose underside on which the box stands is embodied in the form of a peripheral base strip (6) running on narrow-roller conveyors, characterised in that the top side (5) of the bottom (5, 6) on which the goods stand extends flat from side wall (1) to side wall (1) in the case of the box and from edge to edge in the case of the pallet, and in that the base strip (6) is connected to the underside of the bottom by ribs (7) running at right angles to it and by a continuous rib (8) disposed on one of its side edges, forming pockets (9, 15) open to one side and lying completely under the top side (5) of the bottom.

2. Storage and transport means according to claim 1, characterised in that the breadth of the base strip is at least 1.2 times the greatest distance between the balls or narrow rollers of the conveyor on which the box is to run during transport.

3. Storage and transport means according to claim 1, characterised in that all the pockets (9) are open towards the outside.

4. Storage and transport means according to claim 1, characterised in that pockets (15) disposed parallel to double-skinned side walls are open towards the inside towards the middle of the bottom of the box.

## Revendications

1. Elément d'entreposage et de transport réalisé monobloc en matière plastique, en forme de caisse ou de palette, comprenant un fond (5, 6) dont la surface inférieure sur laquelle repose la caisse est conformée en semelle (6) constituée d'une baguette circonférentielle se déplaçant sur des transporteurs à rouleaux, caractérisé en ce que la surface (5) du fond (5, 6) sur laquelle se place la marchandise est plan d'une paroi latérale (1) à l'autre (1) dans une caisse et d'un bord à l'autre dans une palette, et en ce que la semelle en forme de baguette (6) est reliée par des nervures (7) qui lui sont transversales et par une nervure continue (8) disposée sur l'un de ses bords latéraux à la surface inférieure du fond en formant des poches (9, 15) ouvertes vers un côté et situées entièrement sous la surface du fond (5).

2. Elément d'entreposage et de transport selon la revendication 1, caractérisé en ce que la largeur de la semelle en forme de baguette est égale à au moins 1,2 fois la distance maximale séparant les billes ou les rouleaux du chemin de transport sur lesquels la caisse doit se déplacer pendant le transport.

3. Elément d'entreposage et de transport selon la revendication 1, caractérisé en ce que toutes les poches (9) sont ouvertes vers l'extérieur.

4. Elément d'entreposage et de transport selon la revendication 1, caractérisé en ce que des poches (15) qui sont parallèles à des cloisons latérales conformées en parois doubles sont ouvertes vers l'intérieur et vers le centre du fond de la caisse.
